# EUROPEAN PATENT SPECIFICATION

(11) **EP 1 981 216 B1**
(45) Date of publication and mention of the grant of the patent: **17.06.2009**
(21) Application number: 07290455.0
(22) Date of filing: 13.04.2007
(51) Int. Cl.: H04L 12/437, H04L 12/46

(54) **Telecommunication network with interconnection protection**
Telekommunikationsnetz mit Verbindungsschutz
Réseau de télécommunication avec protection d'interconnexion

(43) Date of publication of application: 15.10.2008
(73) Proprietor: Alcatel Lucent, 75008 Paris (FR)
(72) Inventor: Sestito, Vincenzo, 20127 Milano (IT); Umansky, Igor, 49444 Petach Tikva (IL)
(74) Representative: Schmidt, Werner Karl

(56) References cited:
- EP-A- 1 328 090
- US-A1- 2003 154 315
- US-A1- 2006 092 856

## Description

### Technical field

The present invention relates to the field of telecommunication networks. In particular, the present invention relates to a telecommunication network with protection of the interconnection with another telecommunication network, and to a method of protecting the interconnection of a telecommunication network with another telecommunication network.

### Background art

As it is known, a telecommunication network comprises a plurality of nodes configured for communicating the ones with the others and arranged according to a given topology, such as a ring topology, a bus topology, a meshed topology, and so on.

In circuit-switched telecommunication networks, information is transmitted as a TDM ("Time Division Multiplexing") flow along a predefined path which is established before transmission. On the other hand, in packet-switched telecommunication networks information is transmitted in form of packets. In these networks, each packet is routed node by node towards the receiving node, without establishing any predefined path. An intermediate solution is represented by label-switched protocols, which allow to transmit packets in a packet-switched network, each packet following a predefined path.

In telecommunication networks wherein information is transmitted along a predefined path, a protection mechanism must be implemented for protecting the connection between the transmitting node and the receiving node when a failure affects the predefined path. Typically, a protection mechanism provides determining, in addition to the path along which information is actually transmitted (which is usually termed "primary path"), a spare path between the transmitting node and the receiving node (which is usually termed "secondary path"). If a failure occurs on the primary path, the connection between transmitting node and receiving node is guaranteed by the secondary path.

Different protection mechanisms are known in the art. Generally speaking, 1+1 protection mechanisms provide simultaneous transmission of information along both the primary path and the secondary path, whereas 1:1 protection mechanisms provide transmission of information along the sole primary path during normal operation, and along the sole secondary path during possible failure conditions of the primary path.

Nowadays, the transmitting node, the receiving node and intermediate nodes of a path often belong to two or more different networks, which for instance may be managed by different operators. In the following description, for sake of simplicity, only the situation of two networks will be considered, even though the following description may be applied also to any number of networks. In case of two networks, protection of the connection between the transmitting node and the receiving node requires to protect both path portions comprised in each network and interconnection between the two networks.

The ITU-T Recommendation G.842 (04/97), paragraph 6.2.1 discloses to protect the interconnection between two networks (in particular, two SDH rings) by interconnecting the two networks by means of a dual node interconnection. According to the ITU-T G.842, dual node interconnection is an architecture between two rings where two nodes in each ring are interconnected. The two interconnections between the two rings can be arranged to provide protection of the traffic crossing from one ring to the other. It is remarked that, even if the ITU-T G.842 refers to two rings, the dual-node interconnection may be applied to any pair of networks, independently of their topologies, since any topology may be assimilated to a ring formed by the transmitting or receiving node (which will be termed herein after "termination node") and the two interconnection nodes.

A special form of dual node interconnection defined by the ITU-T G.842 is termed "ring interworking". The ring interworking is a network topology whereby two rings are interconnected at two nodes on each ring, and the topology operates such that a failure at either of these two nodes will not cause loss of any working traffic. Ring interworking may be implemented in two different ways.

In a first implementation of the ring interworking, which is described by the ITU-T G.842 (04/97), paragraph 6.2.2, the ring comprises the termination node and the two interconnection nodes, which are referred to as the primary node and the secondary node. These interconnection nodes need not be adjacent. The ring is a Multiplex Section Shared Protection ring (or, briefly, MS-SPRing). This first implementation of the ring interworking allows recovery from the following failure scenarios:
(i) within the MS-SPRing ring, any failure outside of the termination, primary, or secondary nodes are handled in standard fashion;
(ii) a failure of the primary node in the MS-SPRing results in a secondary connection of the tributary;
(iii) for a failure of the secondary node, the tributary at the terminating node is unaffected, since it receives its tributary from the primary node;
(iv) for a failure of either of the signals coming in from the other ring, the primary node in the MS-SPRing chooses the signal that is not failed.
(v) this architecture also protects against a single failure in each of the two rings, provided that these failures are not terminating node failures, or these failures do not combine to affect both interconnections between the rings.

For the unidirectional signal transmitted from the termination node (which is then the transmitting node), the primary node dual feeds that signal both towards the other ring and towards the secondary node. In the other direction, the primary node selects, via a selector, between the hand-offs to the primary and secondary nodes from the other ring, and transmits that selection to the termination node. This interconnection architecture therefore provides protection against the failure of one or both interconnecting nodes (each on different rings, but on the same interconnect), or the connection between the two interconnecting nodes.

The second implementation of the ring interworking, which is described by the ITU-T G.842(04/97), paragraph 6.2.3, is called Sub-Network Connection Protection (or, briefly, SNCP) ring interworking. For each direction of transmission, the signal is dual-fed from the transmitting node around both sides of the ring. When each of the dual-fed signals reaches an interconnection node, it is dropped at that node and continued onto the other interconnection node. Thus, each interconnection node can select from two signals sent on a different way around the ring. The output of the selector in each interconnection node is then transmitted to the second ring. Each of the interconnection nodes in the second ring takes its respective signal and transmits it towards the receiving node, away from the other interconnection node. Finally, the receiving node makes the selection between the two signals from the two directions around the ring. Due to the symmetry of this scheme, the two interconnection nodes are completely equivalent.

EP 1 328 090 discloses a method for topology discovery in a Resilient Packet Ring. This Resilient Packet Ring comprises a plurality of network nodes which are coupled in a ring topology. Each of the nodes exchange information on the topology of said resilient packet Ring and additionally holding said information. The exchanging and holding of this information additionally includes information on a backup node for at least one of said nodes.

US 2006/092856 discloses, in node devices composing a ring network connected to another network with a redundant node device, a topology table includes redundancy information of the redundant node device, a transmitter transmits topology information and the redundancy information of the node devices themselves, a topology table preparing portion prepares a topology table based on redundancy information and topology information received from the redundant node device, and topology information received from the other node device, and a packet distributor distributes a packet received over the ring network based on the topology table.

US 2003/154315 discloses a data communications network including a ring configured for spatial reuse, such as a resilient packet ring. A first bridge is coupled to the ring and to an end station such as an interworking bridge or router. A second bridge coupled to the ring learns an association between the first bridge and the end station by monitoring packets originated in the network by the end station and sent on the ring by the first bridge. The second bridge learns the association by obtaining an identifier of the first bridge and an address of the end station from received packets. When the second bridge receives packets destined for the end station, the packets are forwarded as broadcast transmissions on the ring if the association between the first bridge and the end station has not yet been learned, and are forwarded as unicast transmissions to the first bridge on the ring if the association between the first bridge and the end station has been learned.

### Summary of the invention

The Applicant has felt the need to extend the above architecture described by the ITU-T G.842, paragraphs 6.2.1, 6.2.2, 6.2.3 to non-SDH networks, in particular to packet-switched networks implementing label-switched protocols.

However, the Applicant has noticed that, even if in principle the above architecture may be applied to these networks, this mere application would imply several drawbacks.

Indeed, in the above architecture protection of the interconnection between two networks requires a very high bandwidth consumption. Indeed, according to the first above implementation, the primary node of the first network forwards the traffic to the second network both directly and through the secondary node. Therefore, disadvantageously, both the primary node and the secondary node must allocate bandwidth for forwarding traffic to the second network, even if there is not any failure. According to the second above implementation, bandwidth consumption is even higher, since the termination node of the first network transmits traffic both to the primary node and to the secondary node. Each of the primary and secondary node then forwards such a traffic to the second network both directly and through the other node (secondary and primary respectively). Therefore, in this second implementation, also within the first network bandwidth has to be allocated for transmitting traffic both to the primary node and to the secondary node, even if there is not any failure.

This high bandwidth consumption is particularly disadvantageous in packet-switched networks, wherein the reduce bandwidth consumption is one of the major advantages over the circuit-switched networks.

Accordingly, the Applicant has tackled the problem of providing a telecommunication network with interconnection protection, wherein protection has a dual-node interconnection architecture similar to the one described by the ITU-T G.842, but which has a reduced bandwidth consumption, in order not to impact on network performance in term of bandwidth consumption.

According to a first aspect, the present invention provides a telecommunication network with interconnection protection; the telecommunication network comprises a primary node, a secondary node and a termination node connected to the primary node. Further, the telecommunication network comprises a primary input interface and a primary output interface which are connected to the primary node, and it also comprises a secondary input interface and a secondary output interface which are connected to the secondary node; the primary node comprises a primary bridge configured to receive a first traffic from the termination node. The telecommunication network is **characterized in that** the primary bridge is switchable between a first configuration and a second configuration such that the primary bridge, in the first configuration, forwards the first traffic to the primary output interface while, in the second configuration, it forwards the first traffic to the secondary output interface through the secondary node.

Preferably, the primary node is configured to receive a first signaling message either from the secondary node or the primary input interface, and to switch the primary bridge according to the first signaling message.

According to a first preferred embodiment, the primary node further comprises a primary selector configured to receive a second traffic either from the primary input interface or from the secondary input interface through the secondary node, and to forward the second traffic to the termination node. Preferably, the primary selector is further configured to transmit a second signaling message to the primary output interface and to the secondary output interface through the secondary node.

According to a second preferred embodiment, the primary node further comprises a primary selector configured to receive the first traffic either from the termination node or from the secondary node, and to forward the first traffic to the primary output interface. Preferably, the primary selector is further configured to transmit a third signaling message to the termination node and to the secondary node.

Further, according to this second embodiment, the termination node preferably comprises a termination bridge which is switchable between a first configuration and a second configuration; the termination bridge, in the first configuration, transmits the first traffic to the primary node and, in the second configuration, it transmits the first traffic to the secondary node.

According to this second embodiment, profitably, the termination node is configured to receive a fourth signaling message either from the primary node or from the secondary node, and to switch the termination bridge according to the fourth signaling message.

Besides, according to this second embodiment, the termination node preferably comprises a termination selector configured to receive a second traffic either from the primary node or from the secondary node. Preferably, the termination selector is further configured to transmit a fifth signaling message to the primary node and to the secondary node.

Preferably, according to the second embodiment, the secondary node comprises a secondary bridge configured to receive the first traffic from the termination node, the secondary bridge being switchable between a first configuration and a second configuration; the secondary bridge, in the first configuration, forwards the first traffic to the secondary output interface, while in the second configuration it forwards the first traffic to the primary output interface through the primary node.

Further, preferably, according to the second embodiment the secondary node is configured to receive a sixth signaling message either from the primary node or the secondary input interface, and to switch the secondary bridge according to the sixth signaling message.

Preferably, the secondary node further comprises a secondary selector configured to receive the first traffic either from the termination node or from the primary node, and to forward the first traffic to the secondary output interface. Preferably, the secondary selector is further configured to transmit a seventh signaling message to the termination node and to the primary node.

According to a second aspect, the present invention provides a method of protecting an interconnection of a telecommunication network with a further telecommunication network; the telecommunication network comprises a primary node, a secondary node, a termination node connected to the primary node, a primary input interface and a primary output interface which are connected to the primary node, and a secondary input interface and a secondary output interface which are connected to the secondary node; the method comprises, at the primary node: a) receiving a first traffic from the termination node; b) receiving a first signaling message either from the secondary node or from the primary input interface; and c) switching a primary bridge of the primary node between a first configuration and a second configuration according to the first signaling message, the primary bridge, in the first configuration, forwarding the first traffic to the primary output interface and, in the second configuration, forwarding the first traffic to the secondary output interface through the secondary node.

According to a first preferred embodiment, the method further comprises, at the primary node: d) receiving a second traffic either from the primary input interface or from the secondary input interface through the secondary node, and forwarding the second traffic to the termination node; e) and transmitting a second signaling message to the primary output interface and to the secondary output interface through the secondary node.

According to a second preferred embodiment, the step a) is performed by a primary selector which is configured to receive the first traffic either from the termination node or from the secondary node and to forward the first traffic to the primary output interface, and the method further comprises: f) transmitting a third signaling message to the termination node and to the secondary node.

Preferably, according to this second embodiment, the method further comprises, at the termination node: a') receiving a fourth signaling message either from the primary node or from the secondary node; and b') switching the termination bridge between a first configuration and a second configuration according to the fourth signaling message, the termination bridge, in the first configuration, transmitting the first traffic to the primary node and, in the second configuration, transmitting the first traffic to the secondary node.

### Brief description of the drawings

The present invention will become more clear by reading the following detailed description, given by way of example and not of limitation, to be read by referring to the accompanying drawings, wherein:
- Figure 1 schematically shows a telecommunication network N according to a first embodiment of the present invention;
- Figures 2a, 2b schematically show a first example of two interconnected networks of the type shown in Figure 1, in case of normal operation and in case of a failure on their interconnection, respectively;
- Figures 3a, 3b schematically show a second example of two interconnected networks of the type shown in Figure 1, in case of normal operation and in case of a failure on their interconnection, respectively;
- Figure 4a and 4b schematically show in deeper detail the operation of the first example shown in Figures 2a, 2b, according to a first and a second variant of the first example, respectively;
- Figure 5 schematically shows the structure of a signaling message;
- Figure 6 schematically shows a telecommunication network N according to a second embodiment of the present invention;
- Figures 7a, 7b, 7c and 7d schematically show an example of two interconnected networks of the type shown in Figure 6, in case of normal operation and in case of a failure in three different points of the primary path, respectively;
- Figure 8 schematically shows in deeper detail the operation of the example shown in Figures 7b;
- Figure 9 schematically shows in deeper detail the operation of the example shown in Figures 7c; and
- Figure 10 schematically shows in deeper detail the operation of the example shown in Figures 7d.

### Detailed description of preferred embodiments of the invention

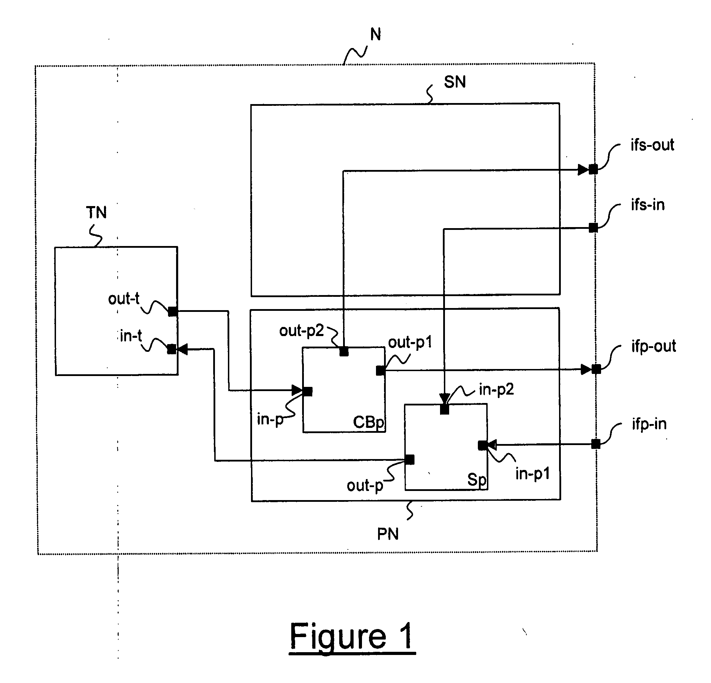

Figure 1 schematically shows a telecommunication network N according to a first embodiment of the present invention. The network N comprises a termination node TN, a primary node PN and a secondary node SN. The network N may comprise other nodes, which are not shown in Figure 1 for sake of clarity. Nodes TN, PN and SN may be non adjacent, even though for simplicity they are represented as adjacent nodes in Figure 1.

The termination node TN comprises an input in-t and an output out-t. The primary node PN comprises a configurable bridge CBp and a selector Sp. The configurable bridge CBp has an input in-p and two outputs out-p1, out-p2. The selector Sp has two inputs in-p1, in-p2 and an output out-p. The output out-t of the termination node TN is connected to the input in-p of the configurable bridge CBp, while the input in-t of the termination node TN is connected to the output out-p of the selector Sp. The output out-p1 of the configurable bridge CBp is connected to a primary output interface ifp-out. Further, the input in-p1 of the selector Sp is connected to a primary input interface ifp-in. Further, the output out-p2 of the configurable bridge CBp is connected to a secondary output interface ifs-out through the secondary node SN. Finally, the input in-p2 of the selector Sp is connected to a secondary input interface ifs-in through the secondary node SN.

Herein after, the operation of the network N will be briefly described.

In case of traffic exiting the network N, the termination node TN transmits the traffic to the primary node PN, which receives it by means of the configurable bridge CBp. Then, the configurable bridge CBp may be switched between:
- a first configuration, wherein it forwards the received traffic out of the network N by means of the output out-p1 and the primary output interface ifp-out; and
- a second configuration, wherein it forwards the received traffic out of the network N by means of the output out-p2, the secondary node SN and the secondary output interface ifs-out.

In case of traffic entering the network N, the traffic is received by the primary node PN either from the primary input interface ifp-in and the input in-p1; or from the secondary input interface ifs-in, the secondary node SN and the input in-p2. Then, the primary node PN forwards the received traffic through the output out-p to the termination node TN.

Accordingly, differently from the implementation described by the ITU-T G.842, paragraph 6.2.2, according to the first embodiment of the present invention the primary node does not duplicate the traffic received from the termination node for forwarding it out of the network N both directly and through the secondary node. On the contrary, the primary node PN, by means of its configurable switch CBp, forwards the traffic either directly or through the secondary node SN. This advantageously allows to reduce the bandwidth consumption, since only one traffic flow is forwarded out of the network N. In other words, the interconnection between the network N and a further network (not shown in Figure 1) is protected not by a 1+1 mechanism, as described by the ITU-T G.842 paragraph 6.2.2, but by a 1:1 mechanism.

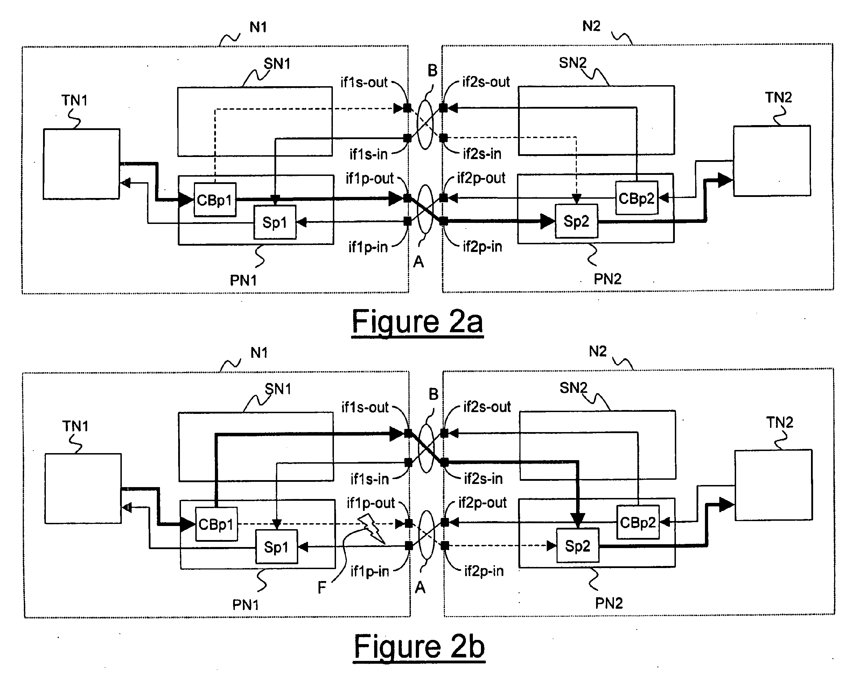

Figures 2a, 2b schematically show a first example of two interconnected networks N1, N2 which are both of the type shown in Figure 1, in case of normal operation and in case of a failure on their interconnection, respectively.

The first network N1 comprises a first termination node TN1, a first primary node PN1 and a first secondary node SN1, a primary input interface if1 p-in, a primary output interface if1p-out, a secondary input interface if1s-in and a secondary output interface if1s-out. Similarly, the second network N2 comprises a second termination node TN2, a second primary node PN2 and a second secondary node SN2, a primary input interface if2p-in, a primary output interface if2p-out, a secondary input interface if2s-in and a secondary output interface if2s-out. The detailed structure of termination, primary and secondary nodes is similar to what shown in Figure 1. In particular, the first primary node PN1 comprises a first configurable bridge CBp1 and a first selector Sp1, whereas the second primary node PN2 comprises a second configurable bridge CBp2 and a second selector Sp2.

In this first example, the primary nodes PN1, PN2 are interconnected each other, and the secondary nodes SN1, SN2 are interconnected each other. More particularly:
- if1 p-in is connected to if2p-out;
- if1 p-out is connected to if2p-in;
- if1s-in is connected to if2s-out; and
- if1s-out is connected to if2s-in.

In Figures 2a and 2b, the connections between the primary interfaces are indicated as A, whilst the connections between the secondary interfaces are indicated as B.

Only traffic transmitted from N1 to N2 is considered. The following considerations apply also to traffic transmitted in the opposite direction, due to the symmetry of the ensemble of the networks N1, N2.

It is assumed that the primary path from the first termination node TN1 to the second termination node TN2 (represented by a bold line in Figure 2a) is the following. The traffic is transmitted from the first termination node TN1 to the first primary node PN1, which forwards it to the second primary node PN2 though the primary interfaces if1 p-out and if2p-in (i.e. connection A), which second primary node PN2 in turn forwards it to the second termination node TN2.

It is now assumed that a failure F occurs on the interconnection between N1 and N2, for instance between the first primary node PN1 and the primary output interface if1p-out, as shown in Figure 2b.

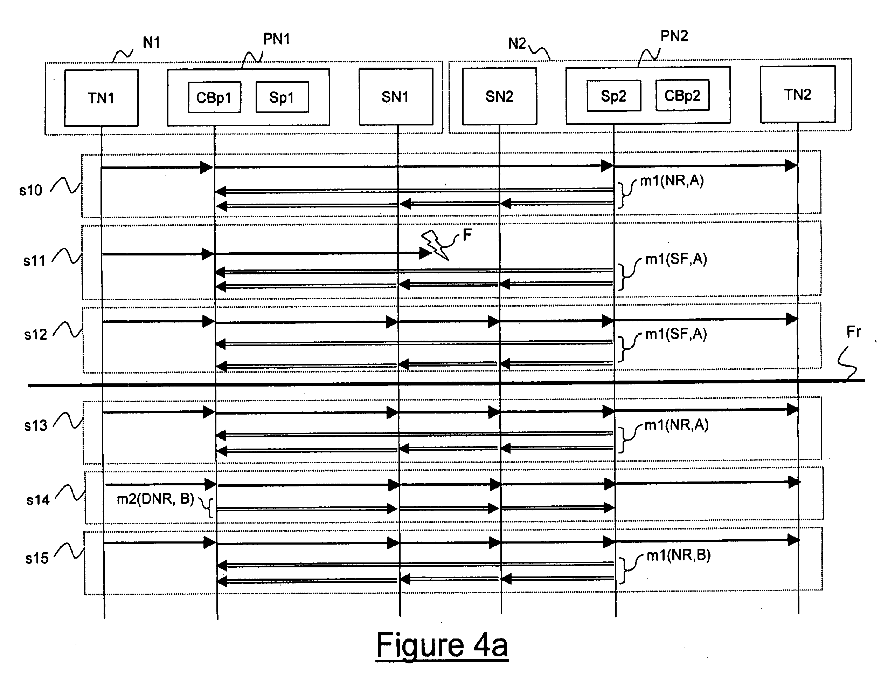

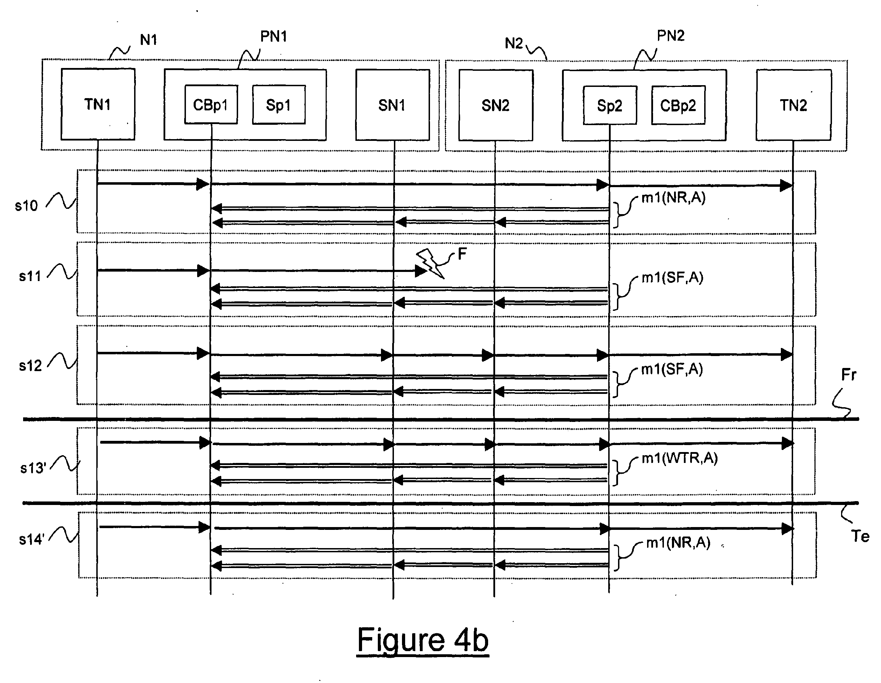

As it will be described in further detail herein after by referring to Figures 4a and 4b, when the failure F occurs, the second primary node PN2 sends to the first primary node PN1 a signaling message indicating the failure F. Upon reception of the signaling message, the first primary node PN1 switches the configurable bridge CBp1 to the configuration wherein the traffic received from the first termination node TN1 is transmitted to the first secondary node SN1, then to the second secondary node SN2 through the secondary interfaces if1s-out and if2s-in (i.e. connection B), and finally to the second primary node PN2. The new active path is indicated in Figure 2b by a bold line.

Advantageously, the primary path indicated in Figure 2a and the new active path indicated in Figure 2b overlap inside the first network N1 between the first termination node TN1 and the first primary node PN1, and inside the second network N2 between the second primary node PN2 and the second termination node TN2. In other words, according to this first embodiment of the present invention, when a failure occurs on the primary path, a new path is activated which overlaps as much as possible with the primary path, i.e. which differs from the primary path only for the failed span. Therefore, protection is performed on a span-by-span basis, and not on a end-to-end basis. This advantageously allows to save bandwidth, since the new path reuses as much as possible the bandwidth already allocated to the primary path. Further, this advantageously allows to have a faster protection mechanism, since the new path portion overlapping with the primary path is already active.

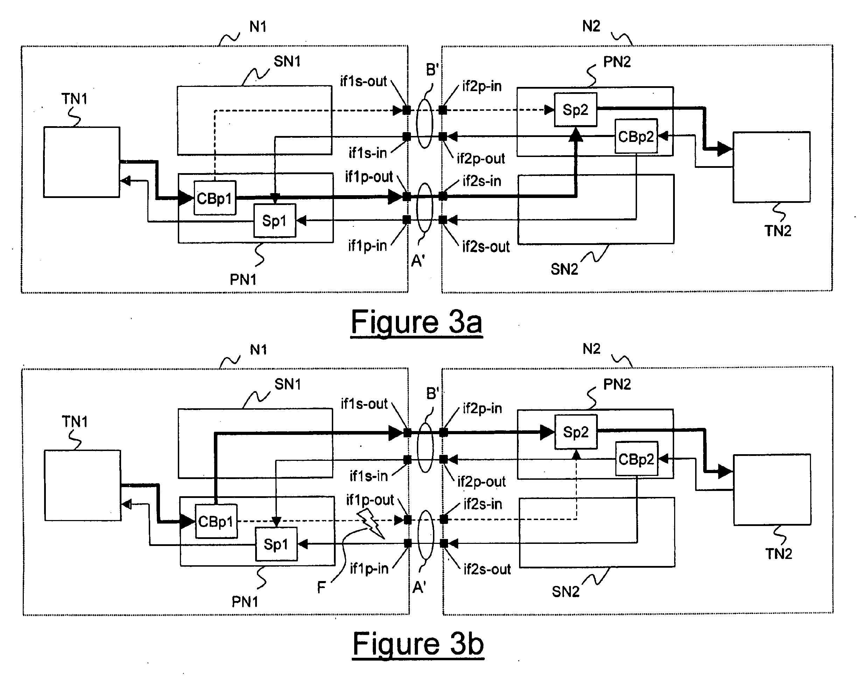

Figures 3a and 3b schematically show a second example of two interconnected networks N1, N2 which are both of the type shown in Figure 1, in case of normal operation and in case of a failure on their interconnection, respectively. In this second example, differently from the first example, the first primary node PN1 is connected to the second secondary node SN2, while the first secondary node SN1 is connected to the second primary node PN2. More particularly:
- if1 p-in is connected to if2s-out;
- if1 p-out is connected to if2s-in;
- if1s-in is connected to if2p-out; and
- if1s-out is connected to if2p-in.

In Figures 3a and 3b, the connection if1p-in/if2s-out and the connection if1p-out/if2s-in are indicated as A', whereas the connection if1s-in/if2p-out and the connection if1s-out/if2p-in are indicated as B'.

Again, only traffic transmitted from N1 to N2 is considered. The following considerations apply also to traffic transmitted in the opposite direction, due to the symmetry of the ensemble of the networks N1, N2.

It is assumed that the primary path from the first termination node TN1 to the second termination node TN2 (represented by a bold line in Figure 3a) is the following. The traffic is transmitted from the first termination node TN1 to the first primary node PN1, which forwards it to the second secondary node SN2 (through the connection A'), which in turn forwards it to the second primary node PN2, which finally forwards it to the second termination node TN2.

It is now assumed that a failure F occurs on the interconnection between N1 and N2, for instance between the first primary node PN1 and the primary output interface if1p-out, as shown in Figure 3b.

Similarly to the first example of Figures 2a, 2b, when the failure F occurs, the second primary node PN2 sends to the first primary node PN1 a signaling message indicating the failure F. Upon reception of the signaling message, the first primary node PN1 switches the configurable bridge CBp1 in the configuration wherein the traffic received from the first termination node TN1 is transmitted to the first secondary node SN1 and then to the second primary node PN2 through the connection B'. The new active path is indicated in Figure 3b by a bold line.

Also in this second example, the primary path indicated in Figure 3a and the new active path indicated in Figure 3b overlap inside the first network N1 between the first termination node TN1 and the first primary node PN1, and inside the second network N2 between the second primary node PN2 and the second termination node TN2. Therefore, also the second example exhibits the same advantages of the first example in terms of reduction of bandwidth consumption and increase of protection mechanism speed.

Figures 4a and 4b schematically show in deeper detail the operation of the first example shown in Figures 2a, 2b, according to a first and a second variant of this first example, respectively.

In the graphs of Figures 4a, 4b, the solid arrows indicate the active path followed by the traffic, while the double arrows indicate the path followed by the signaling messages.

By firstly referring to Figure 4a, showing a first variant which will be termed in the following description "non revertible variant", during a first step s10 the networks N1, N2 normally operate. Accordingly, the traffic follows the above described primary path (i.e. from the first termination node TN1 to the first configurable bridge CBp1, then to the second selector Sp2, and finally to the second termination node TN2). During step s10, preferably, the second primary node PN2 sends to the first primary node PN1 a signaling message m1.

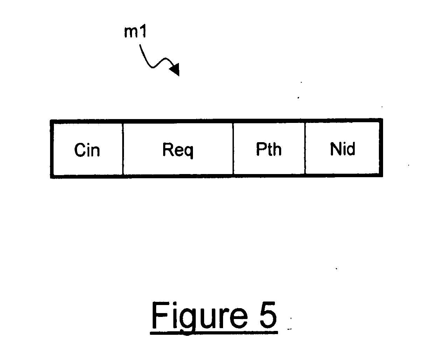

Figure 5 schematically shows the structure of the signaling message m1, according to a preferred embodiment of the present invention. The signaling message m1 preferably comprises:
- a connection field Cin comprising an identifier of the connection protected by the protection mechanism to which the signaling message m1 relates;
- a request field Req comprising a request performed by the node sending the message to the node receiving the message for protecting the connection identified by the connection field Cin;
- a path field Pth comprising an information indicating the allocation of the primary path within the network; and
- a node field Nid comprising an identifier of the node sending the signaling message.

Accordingly, the content of the various fields of the signaling message m1 sent by PN2 during step s10 is the following:
- connection field Cin: identifier of the connection between CBp1 and Sp2;
- request field Req: "NR" i.e. "no request", since the networks are normally operating, and therefore no action for protecting the primary path is required;
- path field Pth: "A" since the primary path is allocated across "A" connection; and
- node field Nid: identifier of PN2.

For clarity, Figure 4a shows in brackets the content of the fields Req and St of the signaling message m1 during the various steps.

Preferably, as shown in Figure 4a, the second primary node PN2 sends the signaling message m1 to the first primary node PN1 both directly (i.e. though the connection A) and indirectly (i.e. through the secondary nodes SN1, SN2 and the connection B). This allows the first primary node PN1 to receive the signaling message m1 even if the failure F is bi-directional.

Further, preferably, the second primary node PN2 periodically sends the signaling message m1 to the first primary node PN1, thus allowing the first primary node to be periodically updated on the status of the connection between CBp1 and Sp2.

By referring again to Figure 4a, during a successive step s11 the failure F shown in Figure 2b occurs. When the second primary node PN2 realizes that it is no more receiving traffic from the primary path, it changes the content of the request field Req into a value indicating the presence of the failure F. Such a value may also be indicative of the failure type. For instance, preferably, a first value "SF" ("signal failure") indicates that the traffic flow is interrupted, while a second value "SD" ("signal degrade") indicates that the traffic flow is degraded. For instance, Figure 4a shows that the content of the request field Req is "SF".

During a successive step s12, the first primary node PN1 receives the signaling message m1 with the "SF" value, and therefore it switches its configurable bridge CBp1 into the configuration wherein that traffic is forwarded to the first secondary node SN1, then to the second secondary node SN2 and finally to the second primary node PN2. Therefore, the primary path becomes inactive, while a new path is activated. In a successive step s13, when the failure F is removed (as shown by the step Fr in Figure 4a), the second primary node PN2 changes the value of the request field Req into "NR", while in the path field Pth still indicates that the primary route allocated across the connection A.

Then, during a successive step s14 of this non revertible variant, the first primary node PN1 starts transmitting to the second primary node PN2 a signaling message m2, indicating to the second primary node PN2 that the currently active path will be active even after removal of the failure F. Preferably, the content of the various fields of the signaling message m2 is the following:
- connection field Cin: identifier of the connection between CBp1 and Sp2;
- request field Req: "DNR" i.e. "do not revert";
- path field Pth: "B" indicating that traffic has not to be reverted to the previously active path, and therefore the currently active path (i.e. the path allocated across the connection B) has to be considered as the new primary path; and
- node field Nid: identifier of PN1.

Preferably, PN1 sends the signaling message m2 to PN2 across both connection A and connection B.

Then, during a successive step s15, after the second primary node PN2 receives the signaling message m2, it changes the path roles, i.e.: the primary path, which is now inactive, is designated as secondary path, while the new active path is designated as primary path. After changing path roles, the second primary node PN2 updates the content of the path field Pth of the signaling message m1 by setting it to the value "B".

By referring now to Figure 4b, the second variant (which will be termed in the following description "revertible variant") will be described. Steps s10, s11 and s12 of this revertible variant are identical to the corresponding steps of the non revertible variant shown in Figure 4a, and therefore a detailed description will not be repeated.

However, differently from the non revertible variant, Figure 4b shows that, when the failure F is removed during a step Fr, the second primary node PN2, during a successive step s13', activates a timer and it updates the value of the request field Req of the signaling message m1 by setting it to a value "WTR", i.e. "wait to restore".

The timer is configured for counting a time at the end of which, if no other failure occurs on the primary path, the traffic is directed again along the primary route. This time may be chosen either from a continuous or discrete range.

When the timer expires (step Te indicated in Figure 4b), during a successive step s14', the first primary node PN1 switches again the first configurable bridge CBp1 to the configuration wherein it transmits the traffic along the restored primary path, and the secondary path becomes again inactive. Accordingly, the second primary node PN2 changes again the value of the request field Req into "NR", while it keeps the value of the path field Pth to the value "A".

Therefore, whilst according to the not revertible variant a single configuration switching of the configurable bridge CBp1 is performed in order to activate a new path bypassing the failure F (and this new path is designated as the primary path), according to the revertible variant a double configuration switching of the configuration bridge CBp1 is performed. Indeed, the first configuration switching activates a new path bypassing the failure F, whilst the second configuration switching (which is performed after a predefined time has elapsed since the failure removal) allows to activate again the restored primary path.

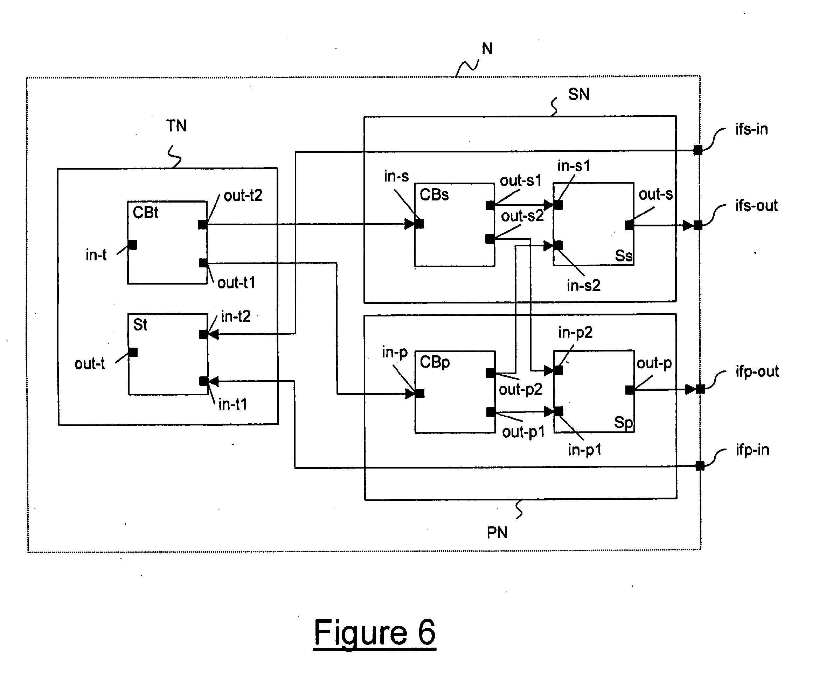

Figure 6 schematically shows a telecommunication network N according to a second embodiment of the present invention. The network N comprises a termination node TN, a primary node PN and a secondary node SN. The network N may comprise other nodes, which are not shown in Figure 6 for sake of clarity. Nodes TN, PN and SN may be non adjacent, even if they are shown as adjacent nodes in Figure 6.

The termination node TN comprises a termination configurable bridge CBt and a termination selector St. The termination configurable bridge CBt has an input in-t and two outputs out-t1, out-t2, while the termination selector St has two inputs in-t1, in-t2 and an output out-t.

The primary node PN comprises a primary configurable bridge CBp and a primary selector Sp. The primary configurable bridge CBp has an input in-p and two outputs out-p1, out-p2, while the primary selector Sp has two inputs in-p1, in-p2 and an output out-p.

The secondary node SN comprises a secondary configurable bridge CBs and a secondary selector Ss. The secondary configurable bridge CBs has an input in-s and two outputs out-s1, out-s2, while the secondary selector Ss has two inputs in-s1, in-s2 and an output out-s.

The output out-t1 of the termination configurable bridge CBt is connected to the input in-p of the primary configurable bridge CBp, while the output out-t2 of the termination configurable bridge CBt is connected to the input in-s of the secondary configurable bridge CBs. The output out-p1 of the primary configurable bridge CBp is connected to the input in-p1 of the primary selector Sp, while the output out-p2 of the primary configurable bridge CBp is connected to the input in-s2 of the secondary selector Ss. The output out-s1 of the secondary configurable bridge CBs is connected to the input in-s1 of the secondary selector Ss, while the output out-s2 of the secondary configurable bridge CBs is connected to the input in-p2 of the primary selector Sp.

The output out-p of the primary selector Sp is connected to a primary output interface ifp-out. Further, the output out-s of the secondary selector Sp is connected to a secondary output interface ifs-out. Further, the input in-t1 of the termination selector St is connected through the primary node PN to a primary input interface ifp-in, while the input in-t2 of the termination selector St is connected through the secondary node SN to a secondary input interface ifs-in.

Herein after, the operation of the network N of Figure 6 will be briefly described.

In case of traffic exiting the network N, the termination node TN may switch the termination configurable bridge CBt between:
- a first configuration, wherein it forwards the traffic received from its input in-t to the primary configurable bridge CBp of the primary node PN; and
- a second configuration, wherein it forwards the traffic received from its input in-t to the secondary configurable bridge CBs of the secondary node SN.

If the traffic is forwarded to the primary configurable bridge CBp of the primary node PN, the primary node PN may switch the primary configurable bridge CBp between:
- a first configuration, wherein it forwards the traffic out of the network N by means of the primary selector Sp and the primary output interface ifp-out; and
- a second configuration, wherein it forwards the traffic out of the network N by means of the secondary selector Ss and the secondary output interface ifs-out.

On the contrary, if the traffic is forwarded to the secondary configurable bridge CBs of the secondary node SN, the secondary node SN may switch the secondary configurable bridge CBs between:
- a first configuration, wherein it forwards the traffic out of the network N by means of the secondary selector Ss and the secondary output interface ifs-out; and
- a second configuration, wherein it forwards the traffic out of the network N by means of the primary selector Sp and the primary output interface ifp-out.

In case of traffic entering the network N, the traffic is received by the termination node TN: either from the primary input interface ifp-in and the primary node PN; or from the secondary input interface ifs-in and the secondary node SN.

Accordingly, differently from what described by the ITU-T G.842, paragraph 6.2.3, according to the second embodiment of the present invention, the termination node does not duplicate the traffic for forwarding it both to the primary node and to the secondary node. On the contrary, the termination node TN, by means of its configurable bridge CBt, forwards the traffic either to the primary node PN or to the secondary node SN. In turn, each of the primary and secondary node, upon reception of traffic from the termination node, forwards the traffic out of the network N either directly or through the other node (secondary or primary, respectively). Therefore, according to this second embodiment, not only the interconnection between the network N and a further network (not shown in Figure 6) is protected by a 1:1 mechanism, but also the interconnection between the termination node TN and the primary and secondary nodes PN, SN within the network N is protected by a 1:1 mechanism.

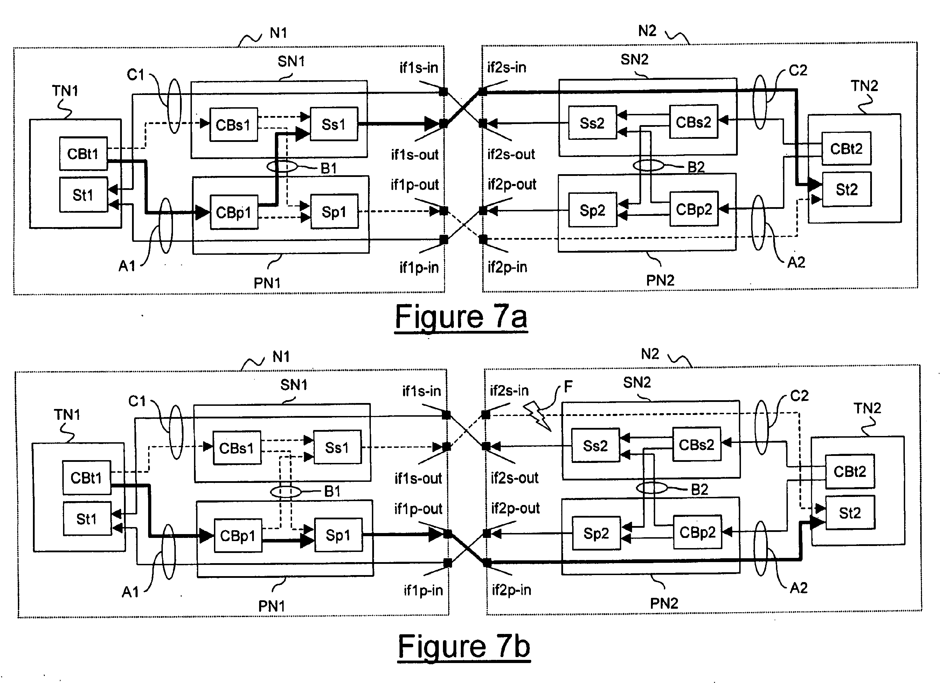

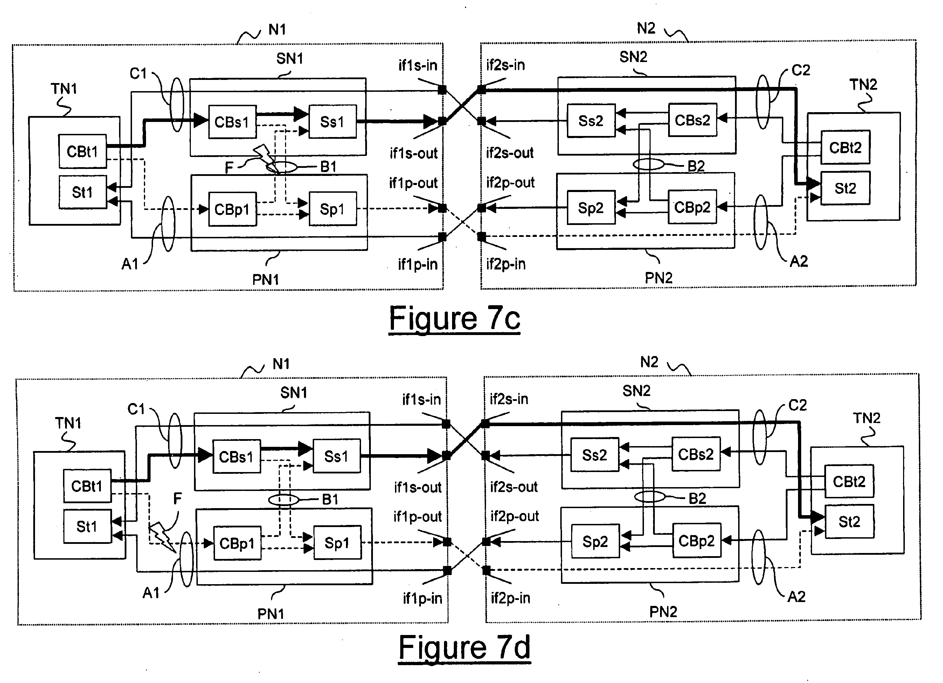

Figures 7a, 7b, 7c and 7d schematically show an example of two interconnected networks N1, N2 which are both of the type shown in Figure 6, in case of normal operation and in case of a failure in three different points of the primary path.

The first network N1 comprises a first termination node TN1, a first primary node PN1 and a first secondary node SN1, a primary input interface if1p-in, a primary output interface if1p-out, a secondary input interface if1s-in and a secondary output interface if1s-out. Similarly, the second network N2 comprises a second termination node TN2, a second primary node PN2 and a second secondary node SN2, a primary input interface if2p-in, a primary output interface if2p-out, a secondary input interface if2s-in and a secondary output interface if2s-out. The detailed structure of termination, primary and secondary nodes is similar to what shown in Figure 1. In particular, the first termination node TN1 comprise a first termination configurable bridge CBt1 and a first termination selector St1, the first primary node PN1 comprises a first primary configurable bridge CBp1 and a first primary selector Sp1, and the first secondary node SN1 comprises a first secondary configurable bridge CBs1 and a first secondary selector Ss1. Similarly, the second termination node TN2 comprise a second termination configurable bridge CBt2 and a second termination selector St2, the second primary node PN2 comprises a second primary configurable bridge CBp2 and a second primary selector Sp2, and the second secondary node SN2 comprises a second secondary configurable bridge CBs2 and a second secondary selector Ss1.

In Figures 7a, 7b, 7c and 7d, the connection between TN1 and PN1 is indicated as A1, the connection between TN1 and SN1 is indicated as C1, while the connection between PN1 and SN1 is indicated as B1. Similarly, the connection between TN2 and PN2 is indicated as A2, the connection between TN2 and SN2 is indicated as C2, while the connection between PN2 and SN2 is indicated as B2.

In this example, the primary nodes PN1, PN2 are interconnected each other, and the secondary nodes SN1, SN2 are interconnected each other. More particularly:
- if1p-in is connected to if2p-out;
- if1 p-out is connected to if2p-in;
- if1s-in is connected to if2s-out; and
- if1s-out is connected to if2s-in.

Only traffic transmitted from N1 to N2 is considered. The following considerations apply also to traffic transmitted in the opposite direction, due to the symmetry of the ensemble of the networks N1, N2.

It is assumed that the primary path from the first termination node TN1 to the second termination node TN2 (represented by a bold line in Figure 7a) is the following. The traffic is transmitted from the first termination node TN1 to the first primary node PN1, which forwards it to the first secondary node SN1, which forwards it to the second termination node TN2 through the secondary interfaces if1s-out and if2s-in and the second secondary node SN2.

By referring to Figure 7b, it is now assumed that a failure F occurs on the interconnection between the first secondary node SN1 and the second secondary node SN2, for instance between the secondary input interface if2sin and the second secondary node SN2, as shown in Figure 7b.

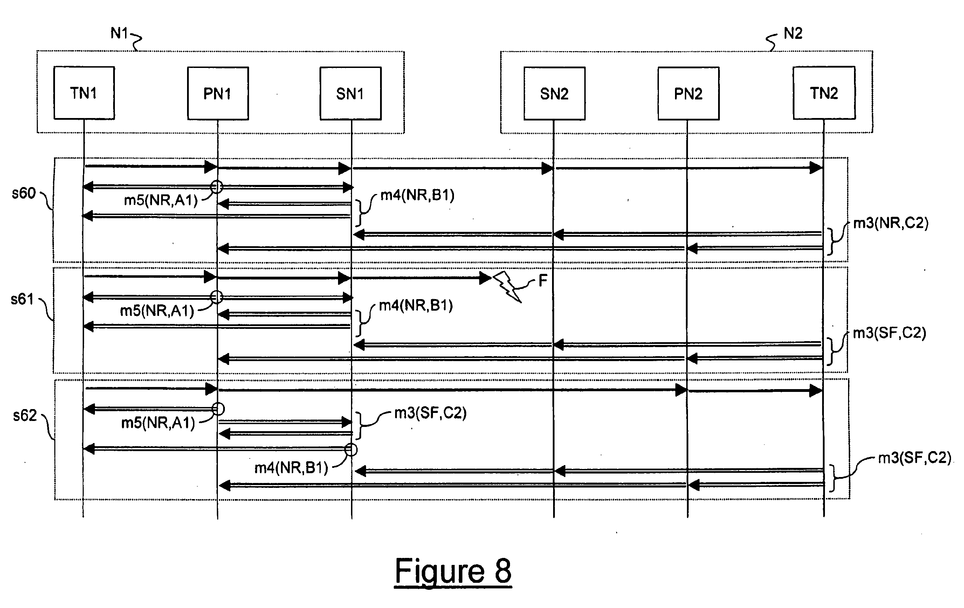

As it will be described in further detail herein after by referring to Figure 8, when the failure F occurs, the second termination node TN2 sends to the first primary node PN1 and to the first secondary node SN1 a signaling message indicating the failure F. Upon reception of the signaling message, the first primary node PN1 switches the configurable bridge CBp1 in the configuration wherein the traffic received from the first termination node TN1 is transmitted to the second termination node TN2 through the first primary selector Sp1, the primary interfaces if1 p-out, if2p-in and the second primary node PN2. The new active path is indicated in Figure 7b by a bold line.

Advantageously, the primary path indicated in Figure 7a and the new active path indicated in Figure 7b overlap inside the first network N1 between the first termination node TN1 and the first primary node PN1.

By referring to Figure 7c, it is now assumed that a failure F occurs on the primary path within the first network N1, e.g. on the interconnection between the first primary node PN1 and the first secondary node SN1, as shown in Figure 7c.

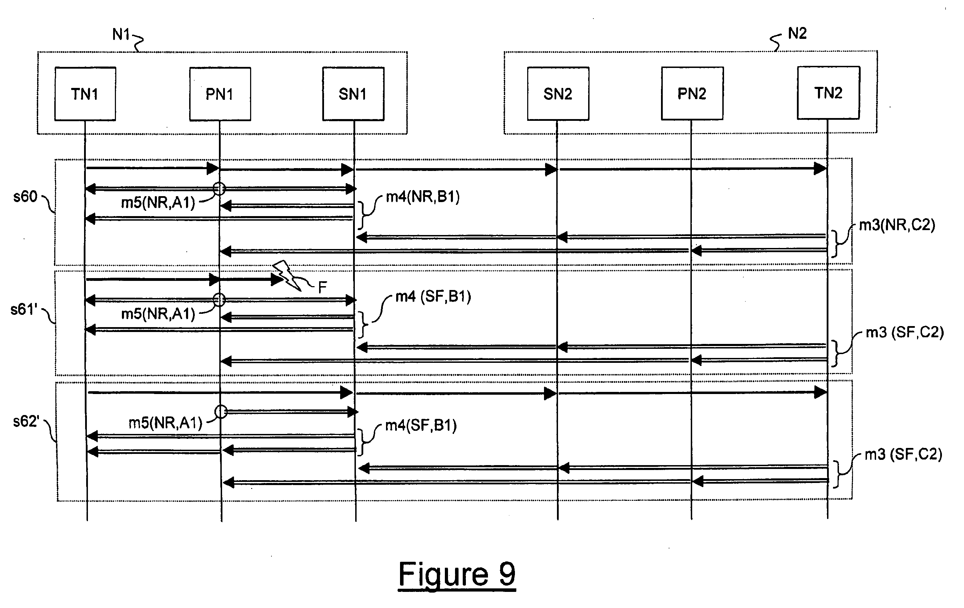

As it will be described in further detail herein after by referring to Figure 9, when the failure F occurs, the first secondary node SN1 sends to the first termination node TN1 and to the first primary node PN1 a signaling message indicating the failure F. Upon reception of the signaling message, the first termination node TN1 switches the configurable bridge CBt1 in the configuration wherein it forwards the traffic directly to the secondary node SN1, while the first secondary node SN1 checks that the first secondary configurable bridge CBs1 is configured for forwarding the traffic received from the first termination node TN1 to the first secondary selector Ss1, so that the traffic is forwarded to the second termination node TN2 through the secondary interfaces if1 s-out and if2s-in and the second secondary node SN2. The new active path is indicated in Figure 7c by a bold line.

Advantageously, the primary path indicated in Figure 7a and the new active path indicated in Figure 7c overlap between the first secondary node SN1 and the second termination node TN2.

By referring to Figure 7d, it is now assumed that a failure F occurs on the primary path within the first network N1, e.g. on the interconnection between the first termination node TN1 and the first primary node PN1, as shown in Figure 7d.

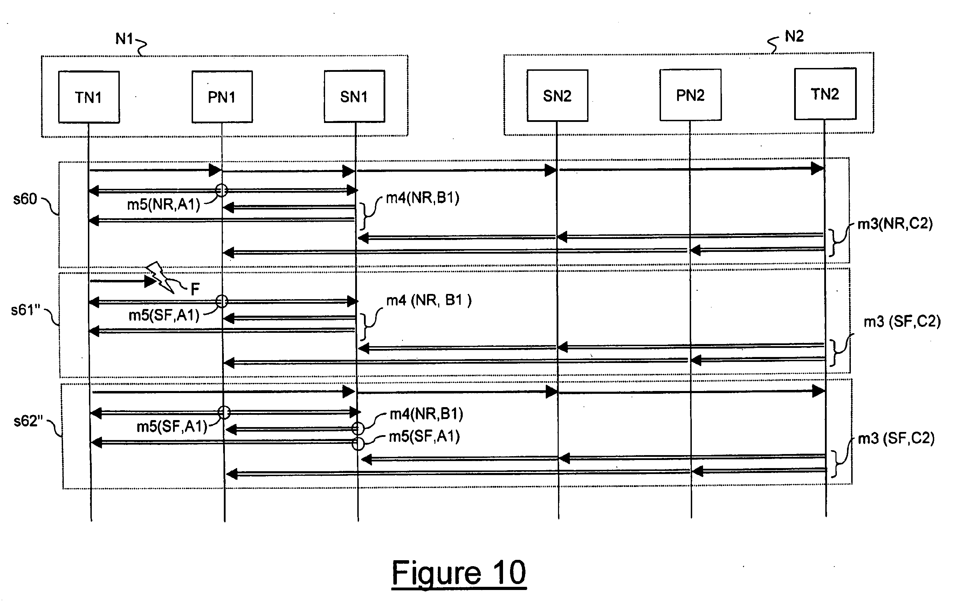

As it will be described in further detail herein after by referring to Figure 10, when the failure F occurs, the first primary node PN1 sends to the first termination node TN1 and to the first secondary node SN1 a signaling message indicating the failure F. Upon reception of the signaling message, the first termination node TN1 switches the configurable bridge CBt1 in the configuration wherein the traffic is transmitted to the first secondary node SN1, while the first secondary node SN1 checks that the first secondary configurable bridge CBs1 is configured for forwarding the traffic received from the first termination node TN1 to the first secondary selector Ss1, so that the traffic is forwarded to the second termination node TN2 through the secondary interfaces if1 s-out and if2s-in and the second secondary node SN2. The new active path is indicated in Figure 7d by a bold line.

Advantageously, the primary path indicated in Figure 7a and the new active path indicated in Figure 7d overlap between the first secondary node SN1 and the second termination node TN2.

Therefore, also according to this second embodiment of the present invention, when a failure occurs on the primary path, a new path is activated which overlaps as much as possible the primary path, i.e. which differs from the primary path only for the failed span. Accordingly, a faster protection mechanism is obtained, and the bandwidth consumption is reduced in comparison to the known solution.

Figure 8 schematically show in deeper detail the operation of the example shown in Figures 7b. In the graph of Figure 8, the solid arrows indicate the active path followed by the traffic, while double arrows indicate the path followed by the signaling messages. For clarity reasons, the detailed structure of the nodes is not shown in Figure 8.

During a first step s60 the networks N1, N2 normally operate. Accordingly, the traffic follows the above described primary path (i.e. from the first termination node TN1, then to the first primary node PN1, then to the first secondary node SN1, then to the second secondary node SN2, and finally to the second termination node TN2). During step s60, preferably, the first primary node PN1 sends to the first termination node TN1 and to the first secondary node SN1 a signaling message m5. Preferably, the content of the various fields of the signaling message m5 is the following:
- connection field Cin: identifier of the connection between CBt1 and St2;
- request field Req: "NR" i.e. "no request";
- path field Pth: "A1", since the primary path is allocated across the connection A1; and
- node field Nid: identifier of PN1.

Further, preferably, during step s60 the first secondary node SN1 sends to the first termination node TN1 and to the first primary node PN1 a signaling message m4. Preferably, the content of the various fields of the signaling message m4 is the following:
- connection field Cin: identifier of the connection between CBt1 and St2;
- request field Req: "NR" i.e. "no request";
- path field Pth: "B1", since the primary path is allocated across the connection B1; and
- node field Nid: identifier of SN1.

Further, preferably, during step s60 the second termination node TN2 sends to the first primary node PN1 (through the second primary node PN2) and to the first secondary node SN1 (through the second secondary node SN2) a signaling message m3. Preferably, the content of the various fields of the signaling message m3 is the following:
- connection field Cin: identifier of the connection between CBt1 and St2;
- request field Req: "NR" i.e. "no request";
- path field Pth: "C2", since the primary path is allocated across the connection C2; and
- node field Nid: identifier of TN2.

Preferably, even if it is not shown in Figure 8, the nodes PN1 and SN1 exchange each other the signaling messages m3 received from TN2.

During a successive step s61 the failure F shown in Figure 7b occurs. When the second termination node TN2 realizes that it is no more receiving traffic from the primary path, it changes the content of the request field Req of the signaling message m3 by setting it to the value "SF" ("signal failure").

During a successive step s62, PN1 and SN1 receive the signaling message m3 from TN2 with the value "SF" in the request field Req, and they exchange each other such a signaling message. Therefore, PN1 switches the configuration of its configurable bridge CBp1 so that traffic is now forwarded to the second primary node PN2 through the primary interfaces and finally to the second termination node TN2. Therefore, the primary path becomes inactive, while a new path is activated.

After step s62, the protection mechanism may continue either according to the non revertible variant shown in Figure 4a or according to the revertible variant shown in Figure 4b. The successive steps are not shown in Figure 8 for simplicity, and therefore they will be briefly summarized herein after.

In case of non revertible variant, when the failure F is removed, TN2 changes the request field Req of the signaling message m3 in "NR", while keeping the value of path field Pth equal to C2. Accordingly, PN1 sends a "DNR" ("do nor revert") signaling message to TN2. Accordingly, TN2 changes the path roles (i.e. the new active path is designated as the primary path) and changes the path field Pth of the signaling message m3 from C2 to A2 (indicating that now the new primary path is allocated across the connection A2).

In case of revertible variant, when the failure F is removed, TN2 activates a timer and changes the request field Req of the signaling message m3 into the value "WTR" ("wait to restore"). Upon expiration of the timer, PN1 switches again configuration of its primary configurable bridge for transmitting again the traffic along the original primary path. Therefore, TN2 updates the field Req of the signaling message m3 into "NR", while keeping the value of the path field Pth equal to C2.

Figure 9 schematically shows in deeper detail the operation of the example shown in Figures 7c. Also in the graph of Figure 9, the solid arrows indicate the active path followed by the traffic, while double arrows indicate the path followed by the signaling messages. For clarity reasons, the detailed structure of the nodes is not shown in Figure 9.

The first step s60, wherein the networks N1, N2 normally operate, is identical to the one shown in Figure 8, and therefore a detailed description will not be repeated.

During a successive step s61' the failure F shown in Figure 7c occurs. When the first secondary node SN1 realizes that it is no more receiving traffic from the primary path, it changes the request field Req of the signaling message m4 by setting it to the value "SF" or "SD".

Also the second termination node TN2 realizes that it is no more receiving traffic from the primary path, and accordingly it changes the request field Req of the signaling message m3 by setting it to the value "SF" or "SD". Preferably, the signaling message m3 having the value "SF" is a transitory signaling message which is transmitted by TN2 until the protection switching operated by the first network N1 is performed. Preferably, such a transitory signaling message m3(SF, C2) has no effect on the switching operated in the first network N1, and therefore it does not induce any switching since, preferably, the nodes PN1 and SN1 receiving such a signaling message are configured to ignore such a signaling message for a predefined time which is preferably counted by a hold off timer.

During a successive step s62', PN1 forwards to TN1 the signaling message m4 received by SN1. When TN1 receives the signaling message m4 with the "SF" request field from SN1 and from PN1, TN1 switches configuration of its configurable bridge CBt1 so that traffic is now forwarded to the first secondary node SN1 through the connection C1. The first secondary node SN1 checks that the configuration of its configurable bridge CBs1 is such that the traffic is forwarded to the second secondary node SN2 through the secondary interfaces if1 s-out and if2s-in. Therefore, the primary path becomes inactive, while a new path is activated.

Also in Figure 9, after step s62', the protection mechanism may continue either according to the non revertible variant shown in Figure 4a or according to the revertible variant shown in Figure 4b. The successive steps are not shown in Figure 9 for simplicity, and therefore they will be briefly summarized herein after.

In case of non revertible variant, when the failure F is removed, SN1 changes the request field of the signaling message m4 into the value "NR". Accordingly, TN1 sends a "DNR" ("do nor revert") signaling message to PN1 and to SN1. Accordingly, SN1 changes the path roles (i.e. the new active path is designated as the primary path) and changes the field Pth of the signaling message m4 from "B1" to "C1".

In case of revertible variant, when the failure F is removed, SN1 activates a timer and changes the field Req value of the signaling message m4 into "WTR" ("wait to restore"). Upon expiration of the timer, SN1 updates the field Req of the signaling message m4 into "NR". Therefore, TN1 changes again configuration of its termination configurable bridge CBt1 for transmitting again the traffic along the original primary path (i.e. the connection A1).

Figure 10 schematically shows in deeper detail the operation of the example shown in Figures 7d. Also in the graph of Figure 10, the solid arrows indicate the active path followed by the traffic, while double arrows indicate the path followed by the signaling messages. For clarity reasons, the detailed structure of the nodes is not shown in Figure 10.

The first step s60, wherein the networks N1, N2 normally operate, is identical to the one shown in Figure 8, and therefore a detailed description will not be repeated.

During a successive step s61" the failure F shown in Figure 7d occurs. When the first primary node PN1 realizes that it is no more receiving traffic from the primary path, it changes the request field Req of the signaling message m5 by setting it to the value "SF" or "SD".

Also the first secondary node SN1 realizes that it is no more receiving traffic from the primary path, and accordingly it changes the request field Req of the signaling message m4 by setting it to the value "SF" or "SD". Preferably, the first secondary node SN1 changes again the value of the signaling message m4 into the value "NR" as soon as it receives the signaling message m5 comprising the "SF" value from the first primary node PN1. In this way, preferably, the signaling message m4 has no effect on switching activity of the nodes TN1 and PN1. Figure 9 shows the situation in which SN! has already received m5 from PN1, and therefore it has already changed the value pf the path field of m4 into "NR".

Also the second termination node TN2 realizes that it is no more receiving traffic from the primary path, and accordingly it changes the request field Req of the signaling message m3 by setting it to the value "SF" or "SD". As already mentioned by referring to Figure 9, the signaling message m3 having the "SF" request field is preferably ignored by the nodes PN1 and SN1.

During a successive step s62", the node SN1 forwards to the first termination node TN1 the signaling message m5 received from PN1. When TN1 receives the signaling message m5 with the "SF" request field from PN1 and SN1, it switches configuration of its configurable bridge CBt1 so that traffic is now forwarded to the first secondary node SN1. The first secondary node SN1 checks that the configuration of its configurable bridge CBs1 is such that the traffic is forwarded to the second secondary node SN2 through the secondary interfaces if1s-out and if2s-in. Therefore, the primary path becomes inactive, while a new path is activated.

Also in Figure 10, after step s62", the protection mechanism may continue either according to the non revertible variant shown in Figure 4a or according to the revertible variant shown in Figure 4b. The successive steps are not shown in Figure 10 for simplicity, and therefore they will be briefly summarized herein after.

In case of non revertible variant, when the failure F is removed, PN1 changes the value of the request field Req of the signaling message m5 into "NR". Accordingly, TN1 sends a "DNR" ("do nor revert") signaling message to PN1 and to SN1. Accordingly, SN1 and PN1 change the path roles (i.e. the new active path is designated as the primary path) and change the path field Pth of the signaling messages m4 and m5 from "B1" and "A1" to "C1", respectively.

In case of revertible variant, when the failure F is removed, SN1 activates a timer and changes the field Req value of the signaling message m4 into "WTR" ("wait to restore"). Upon expiration of the timer, SN1 updates the field Req of the signaling message m4 into "NR". Therefore, TN1 changes again configuration of its termination configurable bridge for transmitting again the traffic along the original primary path.

Even if the above examples refer only to two networks interconnected each other according to the first embodiment (shown in Figure 1) and according to the second embodiment (shown in Figure 6), other examples not shown in the drawings may provide the interconnection of three or more networks according to the first or second embodiment. Other examples not shown in the drawings may also provide the interconnection of a network according to the first embodiment with a network according to the second embodiment.

## Claims

1. A telecommunication network (N) with interconnection protection, comprising a primary node (PN), a secondary node (SN), a termination node (TN) connected to said primary node (PN), a primary input interface (ifp-in) and a primary output interface (ifp-out) which are connected to said primary node (PN), and a secondary input interface (ifs-in) and a secondary output interface (ifs-out) which are connected to said secondary node (SN), said primary node (PN) comprising a primary bridge (CBp) configured to receive a first traffic from said termination node (TN),
said telecommunication network (N) being **characterized in that** said primary bridge (CBp) is switchable between a first configuration and a second configuration, said primary bridge (CBp):
- in said first configuration, forwarding said first traffic to said primary output interface (ifp-out); and
- in said second configuration, forwarding said first traffic to said secondary output interface (ifs-out) through said secondary node (SN).

2. The telecommunication network according to claim 1, wherein said primary node (PN) is configured to receive a first signaling message (m1; m3, m4) either from said secondary node (SN) or said primary input interface (ifp-in), and to switch said primary bridge (CBp) according to said first signaling message (m1; m3, m4).

3. The telecommunication network (N) according to claim 1 or 2, wherein said primary node (PN) further comprises a primary selector (Sp) configured to receive a second traffic either from said primary input interface (ifp-in) or from said secondary input interface (ifs-in) through said secondary node (SN), and to forward said second traffic to said termination node (TN).

4. The telecommunication network (N) according to claim 3, wherein said primary selector (Sp) is further configured to transmit a second signaling message to said primary output interface (ifp-out) and to said secondary output interface (ifs-out) through said secondary node (SN).

5. The telecommunication network (N) according to claim 1 or 2, wherein said primary node (PN) further comprises a primary selector (Sp) configured to receive said first traffic either from said termination node (TN) or from said secondary node (SN), and to forward said first traffic to said primary output interface (ifp-out).

6. The telecommunication network (N) according to claim 5, wherein said primary selector (Sp) is further configured to transmit a third signaling message (m5) to said termination node (TN) and to said secondary node (SN).

7. The telecommunication network according to claim 5 or 6, wherein said termination node (TN) comprises a termination bridge (CBt), said termination bridge (CBt) being switchable between a first configuration and a second configuration, said termination bridge (CBt):
- in said first configuration, transmitting said first traffic to said primary node (PN); and
- in said second configuration, transmitting said first traffic to said secondary node (SN).

8. The telecommunication network according to claim 7, wherein said termination node (TN) is configured to receive a fourth signaling message (m4, m5) either from said primary node (PN) or from said secondary node (SN), and to switch said termination bridge (CBt) according to said fourth signaling message (m4, m5).

9. The telecommunication network according to claim 7 or 8, wherein said termination node (TN) further comprises a termination selector (St) configured to receive a second traffic either from said primary node (PN) or from said secondary node (SN).

10. The telecommunication network according to claim 9, wherein said termination selector (St) is further configured to transmit a fifth signaling message (m3) to said primary node (PN) and to said secondary node (SN).

11. A method of protecting an interconnection of a telecommunication network (N) with a further telecommunication network, said telecommunication network (N) comprising a primary node (PN), a secondary node (SN), a termination node (TN) connected to said primary node (PN), a primary input interface (ifp-in) and a primary output interface (ifp-out) which are connected to said primary node (PN), and a secondary input interface (ifs-in) and a secondary output interface (ifs-out) which are connected to said secondary node (SN), said method comprising, at said primary node (PN):
a) receiving a first traffic from said termination node (TN);
b) receiving a first signaling message (m1; m3, m4) either from said secondary node (SN) or from said primary input interface (ifp-in); and
c) switching a primary bridge (CBp) of said primary node (PN) between a first configuration and a second configuration according to said first signaling message (m1; m3, m4), said primary bridge (CBp):
- in said first configuration, forwarding said first traffic to said primary output interface (ifp-out); and
- in said second configuration, forwarding said first traffic to said secondary output interface (ifs-out) through said secondary node (SN).

12. The method according to claim 11, wherein it further comprises, at said primary node (PN):
d) receiving a second traffic either from said primary input interface (ifp-in) or from said secondary input interface (ifs-in) through said secondary node (SN), and forwarding said second traffic to said termination node (TN); and
e) transmitting a second signaling message to said primary output interface (ifp-out) and to said secondary output interface (ifs-out) through said secondary node (SN).

13. The method according to claim 11, wherein said step a) is performed by a primary selector (Sp) which is configured to receive said first traffic either from said termination node (TN) or from said secondary node (SN) and to forward said first traffic to said primary output interface (ifp-out), and wherein said method further comprises:
f) transmitting a third signaling message (m5) to said termination node (TN) and to said secondary node (SN).

14. The method according to claim 13, wherein it further comprises, at said termination node (TN):
a') receiving a fourth signaling message (m4, m5) either from said primary node (PN) or from said secondary node (SN); and
b') switching said termination bridge (CBt) between a first configuration and a second configuration according to said fourth signaling message (m4, m5), said termination bridge (CBt):
- in said first configuration, transmitting said first traffic to said primary node (PN); and
- in said second configuration, transmitting said first traffic to said secondary node (SN).

## Patentansprüche

1. Ein Telekommunikationsnetz (N) mit Verbindungsschutz, umfassend einen primären Knoten (PN), einen sekundären Knoten (SN), einen an den besagten primären Knoten (PN) angeschlossenen Endknoten (TN), eine primäre Eingangsschnittstelle (ifp-in) und eine primäre Ausgangsschnittstelle (ifp-out), welche an den besagten primären Knoten (PN) angeschlossen sind, und eine sekundäre Eingangsschnittstelle (ifs-in) und eine sekundäre Ausgangsschnittstelle (ifs-out), welche an den besagten sekundären Knoten (SN) angeschlossen sind, wobei der besagte primäre Knoten (PN) eine primäre Brücke (CBp) umfasst, welche konfiguriert ist, um einen ersten Verkehr von dem besagten Endknoten (TN) zu empfangen,
wobei das besagte Telekommunikationsnetzwerk (N) **dadurch gekennzeichnet ist, dass** die besagte primäre Brücke (CBp) zwischen einer ersten Konfiguration und einer zweiten Konfiguration schaltbar ist, wobei die besagte primäre Brücke (CBp):
- in einer ersten Konfiguration den besagten ersten Verkehr an die besagte primäre Ausgangsschnittstelle (ifs-out) weiterleitet; und
- in einer zweiten Konfiguration den besagten ersten Verkehr über den besagten sekundären Knoten (SN) an die besagte sekundäre Ausgangsschnittstelle (ifs-out) weiterleitet.

2. Das Telekommunikationsnetz nach Anspruch 1, wobei der besagte primäre Knoten (PN) konfiguriert ist, um eine erste Signalisierungsnachricht (m1; m3, m4) entweder von dem besagten sekundären Knoten (SN) oder von der besagten primären Eingangsschnittstelle (ifp-in) zu empfangen und die besagte primäre Brücke (CBp) gemäß der besagten ersten Signalisierungsnachricht (m1; m3, m4) zu schalten.

3. Das Telekommunikationsnetz (N) nach Anspruch 1 oder 2, wobei der besagte primäre Knoten (PN) weiterhin einen primären Wahlschalter (Sp) umfasst, welcher konfiguriert ist, um einen zweiten Verkehr entweder von der besagten primären Eingangsschnittstelle (ifp-in) oder von der besagten sekundären Eingangsschnittstelle (ifs-in) über den besagten sekundären Knoten (SN) zu empfangen und den besagten zweiten Verkehr an den besagten Endknoten (TN) weiterzuleiten.

4. Das Telekommunikationsnetz (N) nach Anspruch 3, wobei der besagte primäre Wahlschalter (Sp) weiterhin konfiguriert ist, um eine zweite Signalisierungsnachricht über den besagten sekundären Knoten (SN) an die besagte primäre Ausgangsschnittstelle (ifp-out) und an die besagte sekundäre Ausgangsschnittstelle (ifs-out) zu übertragen.

5. Das Telekommunikationsnetz (N) nach Anspruch 1 oder 2, wobei der besagte primäre Knoten (PN) weiterhin einen primären Wahlschalter (Sp) umfasst, welcher konfiguriert ist, um den besagten ersten Verkehr entweder von dem besagten Endknoten (TN) oder von dem besagten sekundären Knoten (SN) zu empfangen und den besagten ersten Verkehr an die besagte primäre Ausgangsschnittstelle (ifp-out) welterzuleiten.

6. Das Telekommunikationsnetz (N) nach Anspruch 5, wobei der besagte primäre Wahlschalter (Sp) weiterhin konfiguriert ist, um eine dritte Signalisierungsnachricht (m5) an den besagten Endknoten (TN) und an den besagten sekundären Knoten (SN) zu übertragen.

7. Das Telekommunikationsnetz nach Anspruch 5 oder 6, wobei der besagte Endknoten (TN) eine Endbrücke (CBt) umfasst, wobei die besagte Endbrücke (CBt) zwischen einer ersten Konfiguration und einer zweiten Konfiguration schaltbar ist, wobei die besagte Endbrücke (CBt):
- in der besagten ersten Konfiguration den besagten ersten Verkehr an den besagten primären Knoten (PN) weiterleitet; und
- in der besagten zweiten Konfiguration den besagten ersten Verkehr an den besagten sekundären Knoten (SN) weiterleitet.

8. Das Telekommunikationsnetz nach Anspruch 7, wobei der besagte Endknoten (TN) konfiguriert ist, um eine vierte Signalisierungsnachricht (m4, m5) entweder von dem besagten primären Knoten (PN) oder von dem besagten sekundären Knoten (SN) zu empfangen und die besagte Endbrücke (CBt) gemäß der besagten vierten Signalisierungsnachricht (m4, m5) zu schalten.

9. Das Telekommunikationsnetz nach Anspruch 7 oder 8, wobei der besagte Endknoten (TN) weiterhin einen Endwahlschalter (St) umfasst, welcher konfiguriert ist, einen zweiten Verkehr entweder von dem besagten primären Knoten (PN) oder von dem besagten sekundären Knoten (SN) zu empfangen.

10. Das Telekommunikationsnetz nach Anspruch 9, wobei der besagte Endwahlschalter (St) weiterhin konfiguriert Ist, um eine fünfte Signalisierungsnachricht (m3) an den besagten primären Knoten (PN) und an den besagten sekundären Knoten (SN) zu übertragen.

11. Ein Verfahren zum Schutz einer Zusammenschaltung eines Telekommunikationsnetzes (N) mit einem weiteren Telekommunikationsnetz, wobei das besagte Telekommunikationsnetz (N) einen primären Knoten (PN), einen sekundären Knoten (SN), einen an den besagten primären Knoten (PN) angeschlossenen Endknoten (TN), eine primäre Eingangsschnittstelle (ifp-in) und eine primäre Ausgangsschnittstelle (ifp-out), welche an den besagten primären Knoten (PN) angeschlossen sind, und eine sekundäre Eingangsschnittstelle (ifs-in) und eine sekundäre Ausgangsschnittstelle (ifs-out), welche an den besagten sekundären Knoten (SN) angeschlossen sind, umfasst, wobei das besagte Verfahren an dem besagten primären Knoten (PN) umfasst:
a) Empfangen eines ersten Verkehrs von dem besagten Endknoten (TN);
b) Empfangen einer ersten Signalisierungsnachricht (m1; m3, m4) entweder von dem besagten sekundären Knoten (SN) oder von der besagten primären Eingangsschnittstelle (ifp-in); und
c) Schalten einer primären Brücke (CBp) des besagten primären Knoten (PN) zwischen einer ersten Konfiguration und einer zweiten Konfiguration gemäß der besagten ersten Signalisierungsnachricht (m1; m3, m4), wobei die besagte primäre Brücke (CBp):
- in der besagten ersten Konfiguration den besagten ersten Verkehr an die besagte primäre Ausgangsschnittstelle (ifs-out) weiterleitet; und
- in der besagten zweiten Konfiguration den besagten ersten Verkehr über den besagten sekundären Knoten (SN) an die besagte sekundäre Ausgangsschnittstelle (ifs-out) weiterleitet.

12. Das Verfahren nach Anspruch 11, wobei es an dem besagten primären Knoten (PN) weiterhin umfasst;
d) Empfangen eines zweiten Verkehrs entweder von der ersten primären Eingangsschnittstelle (ifp-in) oder von der besagten sekundären Eingangsschnittstelle (ifs-in) über den besagten sekundären Knoten (SN), und Weiterleiten des besagten zweiten Verkehrs an den besagten Endknoten (TN); und
e) Übertragen einer zweiten Signalisierungsnachricht an die besagte primäre Ausgangsschnittstelle (ifp-out) und an die besagte sekundäre Ausgangsschnittstelle (ifs-out) über den besagten sekundären Knoten (SN).

13. Das Verfahren nach Anspruch 11, wobei der besagte Schritt a) von einem primären Wahlschalter (Sp) ausgeführt wird, welcher konfiguriert ist, um den besagten ersten Verkehr entweder von dem besagten Endknoten (TN) oder von dem besagten sekundären Knoten (SN) zu empfangen und den besagten ersten Verkehr an die primäre Ausgangsschnittstelle (ifp-out) weiterzuleiten, und wobei das besagte Verfahren weiterhin umfasst:
f) Übertragen einer dritten Signalisierungsnachricht (m5) an den besagten Endknoten (TN) und an den besagten sekundären Knoten (SN).

14. Das Verfahren nach Anspruch 13, wobei es an dem besagten Endknoten (TN) weiterhin umfasst:
a') Empfangen einer vierten Signalisierungsnachricht (m4, m5) entweder von dem besagten primären Knoten (PN) oder von dem besagten sekundären Knoten (SN); und
b') Schalten der besagten Endbrücke (CBt) zwischen einer ersten Konfiguration und einer zweiten Konfiguration gemäß der besagten vierten Signalisierungsnachricht (m4, m5), wobei die besagte Endbrücke (CBt):
- In der besagten ersten Konfiguration den besagten ersten Verkehr an den besagten primären Knoten (PN) weiterleitet; und
- In der besagten zweiten Konfiguration den besagten ersten Verkehr an den besagten sekundären Knoten (SN) weiterleitet.

## Revendications

1. Réseau de télécommunication (N) avec protection interconnexion, comprenant un noeud primaire (PN), un noeud secondaire (SN), un noeud de terminaison (TN) connecté audit noeud primaire (PN), une interface d'entrée primaire (ifp-in) et une interface de sortie primaire (ifp-out) qui sont connectées audit noeud primaire (PN) ainsi qu'une interface d'entrée secondaire (ifs-in) et une interface de sortie secondaire (ifs-out) qui sont connectées audit noeud secondaire (SN), ledit noeud primaire (PN) comprenant une passerelle primaire (CBp) configurée pour recevoir un premier trafic de la part dudit noeud de terminaison (TN),
ledit réseau de télécommunication (N) étant **caractérisé en ce que** ladite passerelle primaire (CBp) peut commuter entre une première configuration et une deuxième configuration, ladite passerelle primaire (CBp) :
- dans ladite première configuration, transférant ledit premier trafic à ladite interface de sortie primaire (ifp-out) ; et
- dans ladite deuxième configuration, transférant ledit premier trafic à ladite Interface de sortie secondaire (ifp-out) à travers ledit noeud secondaire (SN).

2. Réseau de télécommunication selon la revendication 1, ledit noeud primaire (PN) étant configuré pour recevoir un premier message de signalisation (m1 ; m3, m4) de la part soit dudit noeud secondaire (SN), soit de ladite interface d'entrée primaire (ifp-in) et pour faire commuter ladite passerelle primaire (CBp) conformément audit premier message de signalisation (m1 ; m3, m4).

3. Réseau de télécommunication selon la revendication 1 ou 2, ledit noeud primaire (PN) comprenant en outre un sélecteur primaire (Sp) configuré pour recevoir un deuxième trafic de la part soit de ladite interface d'entrée primaire (ifp-in), soit de ladite interface d'entrée secondaire (ifs-in) à travers ledit noeud secondaire (SN) et pour transférer ledit deuxième trafic audit noeud de terminaison (TN).

4. Réseau de télécommunication (N) selon la revendication 3, ledit sélecteur primaire (Sp) étant en outre configuré pour transmettre un deuxième message de signalisation à ladite interface de sortie primaire (ifp-out) et à ladite interface de sortie secondaire (ifs-out) à travers ledit noeud secondaire (SN).

5. Réseau de télécommunication selon la revendication 1 ou 2, ledit noeud primaire (PN) comprenant en outre un sélecteur primaire (Sp) configuré pour recevoir ledit premier trafic de la part soit dudit noeud de terminaison (TN), soit dudit noeud secondaire (SN) et pour transférer ledit premier trafic à ladite interface de sortie primaire (ifp-out).

6. Réseau de télécommunication (N) selon la revendication 5, ledit sélecteur primaire (Sp) étant en outre configuré pour transmettre un troisième message de signalisation (m5) audit noeud de terminaison (TN) et audit noeud secondaire (SN).

7. Réseau de télécommunication selon la revendication 5 ou 6, ledit noeud de terminaison (TN) comprenant une passerelle de terminaison (CBt), ladite passerelle de terminaison (CBt) pouvant commuter entre une première configuration et une deuxième configuration, ladite passerelle de terminaison (CBt) :
- dans ladite première configuration, transmettant ledit premier trafic audit noeud primaire (PN) ; et
- dans ladite deuxième configuration, transmettant ledit premier trafic audit noeud secondaire (SN).

8. Réseau de télécommunication selon la revendication 7, ledit noeud de terminaison (TN) étant configuré pour recevoir un quatrième message de signalisation (m4, m5) de la part soit dudit noeud primaire (PN), soit dudit noeud secondaire (SN) et pour faire commuter ladite passerelle de terminaison (CBt) conformément audit quatrième message de signalisation (m4, m5).

9. Réseau de télécommunication selon la revendication 7 ou 8, ledit noeud de terminaison (TN) comprenant en outre un sélecteur de terminaison (St) configuré pour recevoir un deuxième trafic de la part soit dudit noeud primaire (PN), soit dudit noeud secondaire (SN).

10. Réseau de télécommunication selon la revendication 9, ledit sélecteur de terminaison (St) étant en outre configuré pour transmettre un cinquième message de signalisation (m3) audit noeud primaire (PN) et audit noeud secondaire (SN).

11. Procédé pour protéger une Interconnexion d'un réseau de télécommunication (N) avec un autre réseau de télécommunication, ledit réseau de télécommunication (N) comprenant un noeud primaire (PN), un noeud secondaire (SN), un noeud de terminaison (TN) connecté audit noeud primaire (PN), une interface d'entrée primaire (ifp-in) et une interface de sortie primaire (ifp-out) qui sont connectées audit noeud primaire (PN) ainsi qu'une interface d'entrée secondaire (ifs-in) et une interface de sortie secondaire (ifs-out) qui sont connectées audit noeud secondaire (SN), ledit procédé comprenant, au niveau dudit noeud primaire (PN) :
a) réception d'un premier trafic de la part dudit noeud de terminaison (TN) ;
b) réception d'un premier message de signalisation (m1 ; m3, m4) de la part soit dudit noeud secondaire (SN), soit de ladite interface d'entrée primaire (ifp-in) ; et
c) commutation d'une passerelle primaire (CBp) dudit noeud primaire (PN) entre une première configuration et une deuxième configuration conformément audit premier message de signalisation (m1 ; m3, m4), ladite passerelle primaire (CBp) ;
- dans ladite première configuration, transférant ledit premier trafic à ladite interface de sortie primaire (ifp-out) ; et
- dans ladite deuxième configuration, transférant ledit premier trafic à ladite interface de sortie secondaire (ifs-out) à travers ledit noeud secondaire (SN).

12. Procédé selon la revendication 11, celui-ci comprenant en outre, au niveau dudit noeud primaire (PN) :
d) réception d'un deuxième trafic de la part soit de ladite interface d'entrée primaire (ifp-in), soit de ladite interface d'entrée secondaire (ifs-in) à travers ledit noeud secondaire (SN) et transfert dudit trafic secondaire audit noeud de terminaison (TN) ; et
e) transmission d'un deuxième message de signalisation à ladite interface de sortie primaire (ifp-out) et à ladite interface de sortie secondaire (ifs-out) à travers ledit noeud secondaire (SN).

13. Procédé selon la revendication 11, ladite étape a) étant exécutée par un sélecteur primaire (Sp) qui est configuré pour recevoir ledit premier trafic de la part soit dudit noeud de terminaison (TN), soit dudit noeud secondaire (SN) et pour transférer ledit premier trafic à ladite interface de sortie primaire (ifp-out) et ledit procédé comprenant en outre :
f) transmission d'un troisième message de signalisation (m5) audit noeud de terminaison (TN) et audit noeud secondaire (SN).

14. Procédé selon la revendication 13, celui-ci comprenant en outre, au niveau dudit noeud de terminaison (TN) :
a) réception d'un quatrième message de signalisation (m4, m5) de la part soit dudit noeud primaire (PN), soit dudit noeud secondaire (SN) ; et
b) commutation de ladite passerelle de terminaison (CBt) entre une première configuration et une deuxième configuration conformément audit quatrième message de signalisation (m4, m5), ladite passerelle de terminaison (CBt) :
- dans ladite première configuration, transmettant ledit premier trafic audit noeud primaire (PN) ; et
- dans ladite deuxième configuration, transmettant ledit premier trafic audit noeud secondaire (SN).
